# EUROPEAN PATENT APPLICATION

(11) **EP 2 977 360 A1**
(43) Date of publication of application: **27.01.2016**
(21) Application number: 15178131.7
(22) Date of filing: 23.07.2015
(51) Int. Cl.: C03B 37/018

(54) **ISOTHERMAL PLASMA CVD SYSTEM FOR REDUCED TAPER IN OPTICAL FIBER PREFORMS**

(30) Priority: 24.07.2014 US 201414339586
(71) Applicant: Ofs Fitel Llc, A Delaware Limited Liability Company, Norcross, GA 30071 (US)
(72) Inventor: ALONZO, John C., Somerset, NJ 08873 (US); BRAGANZA, David D., Southbridge, MA 01566 (US); BRODEUR, Merrill H., Ware, MA 01082 (US); FLEMING, James W., Westfield, NJ 07090 (US)
(74) Representative: Zimmermann, Tankred Klaus

(57) **Abstract**

A chemical vapor deposition (CVD) system is configured to reduce the presence of geometrical and optical taper at the end sections of the preform, or more generally controlling the axial profile of the fabricated optical fiber preform. The system is configured to create an isothermal plasma with an RF coil (22) within the substrate tube (12), with a relatively confined deposition zone (40) located upstream of the plasma. A reagent delivery system (50) is configured to adjust the composition and concentration of the introduced species in synchronization with the movement of the plasma and deposition zone within the substrate tube. By synchronizing the movement of the plasma with the adjustable reagent delivery system, it is possible to provide precision control of the axial profile of the created optical fiber preform.

## Description

### Technical Field

The present invention relates to chemical vapor deposition (CVD) systems for creating optical fiber preforms and, more particularly, to an isothermal plasma CVD system that is particularly configured to reduce the creation of unwanted axial non-uniformities (in both geometry and composition), particularly occurring at the end sections of a preform substrate tube.

### Background of the Invention

Optical fiber preforms can be produced by chemical vapor deposition (CVD) techniques in which glass-forming chemical species are deposited on the inside of a silica substrate tube in a manner where the interior of the tube is coated with the deposited material. During the CVD process, vitreous glass or its soot precursor is deposited over a defined length of the substrate tube. In order to ultimately form an optical fiber of desired optical characteristics, it is important that the layers deposited during CVD exhibit a uniform cross-sectional area along the length of the substrate tube (i.e., in the axial direction), as well as exhibit a uniform refractive index profile (or follow a pre-defined refractive index profile shape).

However, unwanted axial non-uniformities often occur in either one or both of these desired outputs and are typically most pronounced in the regions adjacent to the terminal points of the substrate tube that delineate the overall deposition area (these terminal non-uniform regions often referred to as "end tapers"). In cases where the non-uniformity is associated with variations in the cross-sectional area, these regions are defined as "geometric end tapers"; "optical end tapers" is a phrase that is used to refer to terminal regions where the refractive index is non-uniform in the axial direction.

Several approaches have been tried in the past to eliminate the formation of these end tapers. In a modified CVD (MCVD) process, for example, the deposition rate on the substrate tube can be varied near the terminal points of the tube by varying the speed of the movement of an associated external heat source (i.e., "torch") along the substrate, or the chemical reactant flow rate, or both. Since the deposition zone in an MCVD system is relatively long (i.e., extends along a majority of the interior of the substrate tube, perhaps a distance of 30 cm or more), changes made at one axial location affect a long length of the deposited material. As a result, the ability to make precise, local changes in the properties of the preform is extremely difficult.

In a plasma CVD (PCVD) process, one approach for overcoming problems associated with the creation of end tapers includes modifying the wall temperature of the substrate tube in its terminal regions by using an external heat source that is located in proximity to each end of the substrate tube. Another approach includes modifying the internal deposition reaction rate by adjusting the output power of the deposition energy source. In particular, varying the plasma power can be used to vary the deposition rate in the end regions of the substrate tube. Additional approaches include varying other process parameters, such as the process pressure maintained inside the substrate tube. Variations in the velocity and/or traverse distance of the plasma energy source with respect to the substrate tube have also been tried in an attempt to address the end taper problem.

While some of these techniques have been somewhat helpful in reducing the presence of end tapers, they are all of limited ability since none of these techniques is able to directly control the composition of the deposited glass material. That is, these prior art techniques are not able to adjust, in real time, the actual concentration of the chemical reagents delivered to the deposition zone at a given time during the process, or at a given position along the substrate tube. Indeed, the relatively long deposition zone associated with prior art systems inevitably creates an axial gradient in glass composition, which is yet another undesirable result.

Additionally, the various techniques developed to address the end taper problem tend to be associated with systems exhibiting a traverse time of about ten minutes. The traverse time is defined as the length of time required for an energy source to completely traverse the longitudinal extent ("axial" direction) of a substrate tube. More recent systems, however, are based upon an arrangement where the traverse time is reduced to the order of several seconds. The prior art relative velocity approaches are not feasible for these high speed systems.

### Summary of the Invention

The needs remaining in the prior art are addressed by the present invention, which relates to chemical vapor deposition (CVD) systems for creating optical fiber preforms and, more particularly, to an isothermal plasma CVD system that is particularly configured to reduce the creation of unwanted axial non-uniformities (in both geometry and composition), particularly occurring at the end sections of a preform substrate tube.

In accordance with the present invention, an isothermal plasma CVD system is used in a manner that provides precision control of a fabricated optical preform in terms of both its cross-sectional area and refractive index profile. In particular, the system and method tailors the profiles by synchronizing the reagent delivery system with the velocity and/or position of the isothermal plasma created within the substrate tube.

In particular, the isothermal plasma CVD apparatus is configured to create a relatively narrow deposition zone of well-defined boundaries, the deposition zone being restricted in position to a narrow region immediately upstream of the isothermal plasma. By limiting the extent of the deposition zone to this specific region, adjustments in the deposition parameters can be performed in real time to maintain the geometric and optical properties of the preform within defined bounds. A delivery system for the chemical species is configured to be able to change the flow rates of the various reagents under the control of a processor that also controls the movement of the isothermal plasma. In one embodiment, a flash evaporator system (in place of a bubbler system) has been found to improve the response time of the delivery system. Programmable arrangements for controlling the relative movement of the isothermal plasma with respect to the substrate tube (both velocity and location) thus overcome the tendency for the terminations of the substrate tube to develop tapers.

In one embodiment, the present invention relates to an apparatus for providing axial profile control of layers deposited within a substrate tube during the fabrication of an optical fiber preform. The apparatus comprises a plasma chemical vapor deposition (CVD) reactor configured to create an isothermal plasma within a preform substrate tube, forming a narrow deposition zone located within the substrate tube upstream of the isothermal plasma by maintaining a relatively low pressure (e.g., less than 1 atm) within the substrate tube. A radio frequency (RF) energy source is used to induce the creation of the isothermal plasma, the energy source comprising a coil surrounding the substrate tube and an RF signal source for directing an electrical signal through the coil. The coil itself is configured to traverse back and forth along the length of the preform substrate tube, perhaps attached to a rail or some other type of system capable of imparting physical movement of the coil with respect to the substrate tube (and, therefore, controlling the position of the isothermal plasma and narrow deposition zone within the substrate tube). A delivery system is coupled to the reactor for introducing chemical reagents into the narrow deposition zone of the substrate tube. In particular, the operation of the delivery system (with respect to the specific reagents that are introduced and the concentration of each introduced reagent) is synchronized with the movement of the coil (and therefore the plasma) to provide the desired axial control of the materials deposited on the inner wall of the substrate tube.

In another embodiment, the present invention defines a method of providing axial profile control of layers deposited within an optical fiber preform, including the steps of: inserting a preform substrate tube within a chemical vapor deposition (CVD) reactor; creating an isothermal plasma within the preform substrate tube and a deposition zone located upstream of the isothermal plasma, where the isothermal plasma and deposition zone are controlled to move in an axial direction back and forth within the substrate tube; introducing reagents into the deposition zone within the substrate tube from a delivery system that is configured to respond to control signals for changing the reagent composition and concentration; and controlling the movement of the plasma within the substrate tube and the flow of reagents into the deposition zone in a synchronized manner that creates the desired axial refractive index profile control of the layers deposited within the substrate tube.

Other and further embodiments and aspects of the present invention will become apparent during the course of the following discussion and by reference to the accompanying drawings.

### Brief Description of the Drawings

Referring now to the drawings,
FIG. 1 is a simplified illustration of an exemplary deposition apparatus that may be used to perform low pressure, isothermal plasma CVD in a manner that controls the axial refractive index profile of the deposited materials, in accordance with the present invention;
FIG. 2 is a detailed illustration of a portion of the apparatus of FIG. 1, illustrating an associated reagent delivery system that is configured and controlled to provide precision profile control of an optical fiber preform during an isothermal plasma CVD fabrication process; and
FIG. 3 illustrates an alternative embodiment of the configuration of FIG. 2, including the use of a flash evaporation apparatus as the delivery system for the plasma CVD apparatus.

### Detailed Description

As will be discussed in detail below, the present invention relates to an isothermal plasma CVD apparatus and an associated method of fabricating optical fiber preforms that provides improved axial control of both cross-sectional area and refractive index profile of the preform. The apparatus and method are based upon the use of a low pressure (i.e., less than about 1 atm) isothermal plasma CVD process that creates a deposition hot zone that is narrowly confined to a region within the substrate tube that is immediately "upstream" of the isothermal plasma. The ability to create a narrow deposition zone (which is typically less than 5% of the total length of the substrate tube) allows for continuous modification of the deposition parameters and the ability to quickly respond and adjust the flows of the various constituents as necessary to maintain the desired axial refractive index profile shape. The ability to adjust reagent concentration as a function of elapsed process time and/or position of the coil (i.e., to synchronize the operation of the delivery system with the plasma-creating system) provides precise control of the axial refractive index profile shape along an optical fiber preform.

In particular, tailoring of the deposition profiles is provided by optimizing the reagent delivery response time to permit synchronizing the flow of the chemical reagents with the position and velocity of the plasma-producing energy source (typically, the coil). Chemical reagents such as SiCl₄, GeCl₄, C₂F₆, SiF₄, P₂O₅, B₂O₃, AlCl₃, TiO₂ and the like can be independently adjusted during a single traverse of the coil along the substrate tube. Delivery synchronization can be optimized, for example, by configuring the delivery lines to reduce gas flow time (i.e., increasing gas flow rate) and/or by locating the delivery system as close to the plasma CVD apparatus as possible.

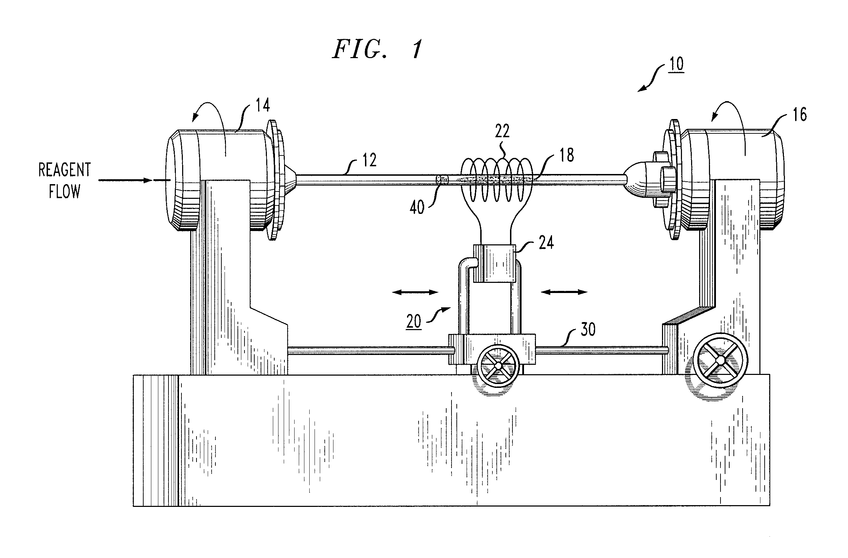

FIG. 1 illustrates an exemplary apparatus reactor 10 that may be used in conjunction with the teachings of the present invention to fabricate optical fiber preforms with the improved control of the axial refractive index profile shape (either a "uniform" profile, or any other desired type of axial-based, precision profile characteristic). Reactor 10 is shown as supporting a preform substrate tube 12 between a pair of end supports 14 and 16. Supports 14 and 16 are configured to stabilize the position of substrate tube 12, as well as to provide rotational motion to the tube, as indicated by the arrows in FIG. 1. Substrate tube 12 itself is typically formed of vitreous fused silica, with a plasma CVD process used to deposit additional layers of glass material along the interior surface of substrate tube 12.

An isothermal plasma 18 is generated within substrate tube 12 by an RF energy source 20, which comprises an RF coil 22 that is disposed to surround an exterior portion of substrate tube 12 and an RF signal source 24 that is used to deliver the energy to RF coil 22. The supplied signal creates an electro-magnetic field within the portion of substrate tube 12 that is surrounded by RF coil 22. For the purposes of the present invention, it has been found that the use of a concentrator coil is a preferred embodiment for RF coil 22 inasmuch as a concentrator coil will shape the electro-magnetic field to a relatively small volume. In one particular embodiment, a water-cooled RF concentrator coil may be used.

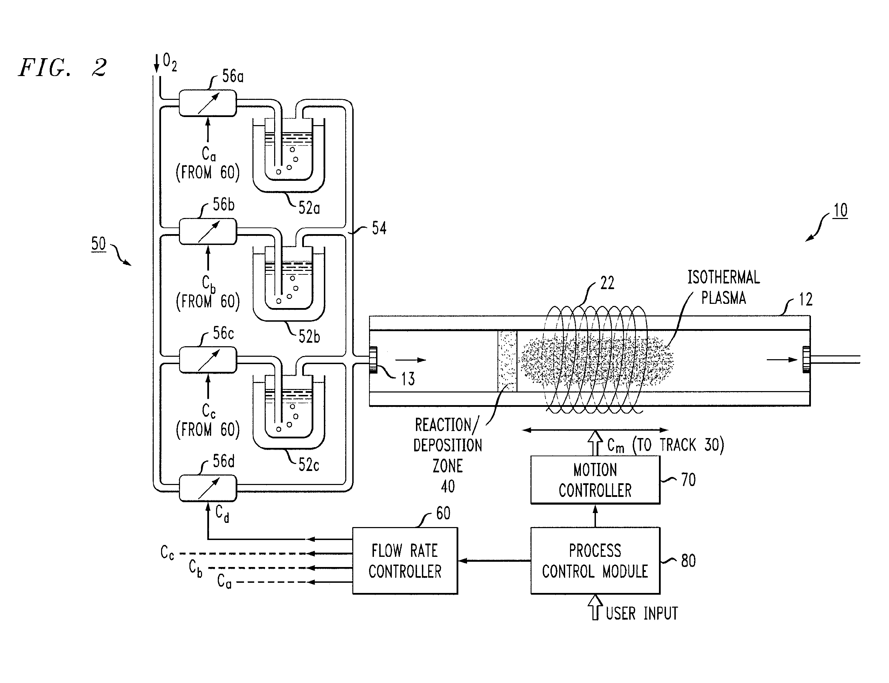

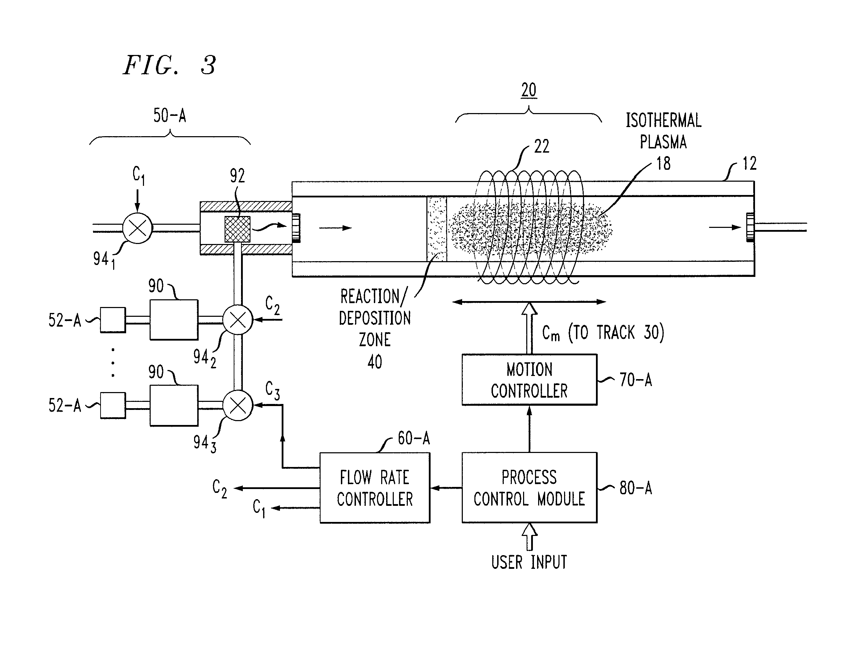

Upon the introduction of gaseous chemical reagents (shown as "reagent flow" in FIG. 1, and shown in more detail in FIGs. 2 and 3), isothermal plasma 18 is created by the coupling of the electro-magnetic field with the gaseous reagents. Indeed, for the purposes of the present invention a "plasma" is defined as a mass of gaseous material resembling a vapor in physical properties, but containing free electrons, ionized matter and neutral particles (generally of approximately zero net charge). More particularly, an "isothermal" plasma is created when the ions and electrons forming the plasma exhibit essentially the same temperature and have essentially the same energy level. Importantly, the use of an isothermal plasma in the arrangement of the present invention allows for the reaction of the chemical species and the deposition of the preform material to occur immediately "upstream" of plasma 18, shown as deposition zone 40 in FIG. 1.

As used through this discussion, the term "upstream" is considered to refer to that portion of the substrate tube between isothermal plasma 18 and the inlet port(s) used for the introduction of the reagents to substrate tube 12. This particular upstream deposition mechanism results in the creation of molten glass particles (as opposed to soot) through homogeneous particle formation and growth, where these molten glass particles are then thermophoretically deposited upstream of plasma 18, within zone 40. That is, the deposition occurs prior to the reagents entering the plasma region. A narrow heat zone (a central portion of the plasma) provides a high concentration of heat for reaction and thermophoretic deposition while also increasing the temperature on the side wall of the substrate tube in preparation of deposition. Thus, as RF coil 22 traverses substrate tube 12 and the isothermal plasma likewise moves along within substrate tube 12, the heated zone "upstream" of the plasma is the area where deposition occurs.

By maintaining a low pressure within the plasma CVD reactor (i.e., less than atmospheric pressure, for example, about 1 atm), the created deposition zone will be confined to a narrow region (on the order of about 1-5% of the tube length, generally about one centimeter or less), having a definite "edge" at the boundary with the plasma. The low pressure also helps to reduce the heat content of the very high temperature plasma so that the substrate and deposited reagents are not vaporized by the plasma.

Referring again to FIG. 1, RF coil 22 is shown as coupled to a track 30 that is used to move RF coil 22 back and forth along the length of substrate tube 12 (i.e., creating the relative motion of the coil with respect to the tube). This controlled, relative motion of RF coil 22 with respect to substrate tube 12 allows for the isothermal plasma to likewise move within substrate tube 12, with deposition zone 40 moving in a manner that allows for the deposition process to progress along the length of substrate tube 12 in a well-controlled process. As mentioned above, in newer systems, the traverse time along a standard substrate tube is on the order of about 2 seconds. For a tube length of about one meter, this translates to a velocity of coil 22 on the order of about 50 cm/sec. It is to be understood that various other arrangements for providing relative movement between RF coil 22 and substrate tube 12 may be used (including holding RF coil 22 stationary and moving substrate tube 12 back and forth within the coil. Indeed, any arrangement that provides for the movement of the isothermal plasma along at least a portion of the axial extent of the substrate tube is considered to fall within the scope of the present invention.

In further accordance with the present invention, the precision flow required to effect precise control of a preform's axial profile (both cross-sectional area and refractive index) is achieved by configuring the reagent delivery source to be able to continuously modify the selection and concentration of the reagents in concert with the movement of the RF coil.

FIG. 2 is a detailed illustration of a portion of reactor 10 as described above, and a delivery system 50 that is used in accordance with the present invention to deliver the carrier gas and various reagent chemical species to substrate tube 12 during the low pressure, isothermal plasma CVD process. In the particular configuration of FIG. 2, delivery system 50 is a bubbler type of delivery system, using a plurality of reagent sources 52 (such as SiCl₄, GeCl₄. etc). In the particular embodiment of FIG. 2, a set of three different reagent sources 52a, 52b and 52c are shown. It is to be understood that any desired number of separate chemical reagent sources may be used A carrier gas, such as O₂, is bubbled through these sources and the gas vapors are then directed along delivery lines 54 and into substrate tube 12 via an inlet port 13. Mass flow controllers 56 are used to control the flow rate output from each source 52, where each source is seen to include a separate mass flow controller 56a, 56b, and 56c. A fourth mass flow controller 56d is used to control the flow rate of the carrier gas (in this case, O₂) into the reactor.

In comparison to various conventional delivery systems, delivery system 50 of the present invention is coupled to energy source 20 in a manner that provides reagent delivery that is synchronized with the movement of RF coil 22 along substrate tube 12. In one embodiment, delivery system 50 is located as close as possible to reactor 10 such that delivery lines 54 are as short as possible. This allows for adjustments in the flow rate of the chemical sources 52 to more quickly appear as adjusted reagent concentrations within substrate tube 12. Additionally, mass flow controllers 56 are shown as controlled by a flow rate controller 60, where controllers 56 are preferably configured with a fast response time (on the order of approximately 0.01 - 0.10 seconds) so that their operation may be properly synchronized with the movement of RF coil 22.

As discussed above, an aspect of the present invention is to properly synchronize any changes in reagent concentration with the position and/or movement of RF coil 22 (in one example, along track 30, shown in FIG. 1), since the movement of RF coil 22 is used to control the position of plasma 18 and deposition zone 40 within substrate tube 12. Referring to FIG. 2, a control signal from a motion controller 70 is used to control the movement of coil 22 along track 30, in terms of both the velocity of the movement, as well as the real-time positioning of coil 22 with respect to substrate tube 12. An overall process control module 80 is used to ensure the synchronization between operation of flow rate controller 60 and motion controller 70, taking into account known "lags" (delays) and other constraints associated with the actual movement of coil 22 with respect to substrate tube 12. In one embodiment, a programmable logic controller (PLC) can be used as process control module 80, responding to user input data from the fabrication personnel to properly achieve the desired refractive index profile shape in the axial direction along the perform.

Another modification to a standard CVD process that may be employed in the method and apparatus of the present invention is the utilization of a flash evaporator-based reagent delivery system in place of the bubbler-based delivery system as shown in FIG. 2. In vacuum-based CVD processes where reagent residence times in the substrate tube are very small, synchronization of reagent concentration with the motion and/or position of the RF coil (and thus the associated plasma and deposition zone) is very challenging when using a conventional bubbler-based reagent delivery systems.

In contrast, a flash evaporator system functions by atomizing the reagents to form droplets (of a size ranging from about 1 to 50 µms) that are then "flash vaporized" by contacting a heated surface. The use of a flash evaporator delivery system thus requires only a relatively small volumetric flow of the carrier gas to effectively deliver the reagents to the substrate tube. As a result, the use of a flash evaporator allows for greater flexibility in the range of reagent concentrations that can be rapidly delivered to the narrow deposition zone.

Referring to FIG. 3, an apparatus is shown that utilizes a flash evaporator delivery system 50-A to create the reagent stream that is introduced into substrate tube 12. Flash evaporator delivery system 50-A is shown as including a plurality of reagent sources 52-A (similar to sources 52 as shown in FIG. 2), where the output flow from each source is passed through an associated atomizer 90 that is configured to create droplets of the desired size. The droplets pass downstream to a heated grid 92 that functions to vaporize these droplets, forming (with the carrier gas) the stream that is introduced into substrate tube 12.

As with the embodiment described above, the configuration as shown in FIG. 3 utilizes a mass flow controller 60-A that is synchronized in operation with a motion controller 70-A via a process control module 80-A. A plurality of mass flow controllers 94₁, 94₂ and 94₃ are shown as responsive to individual control signals C₁, C₂ and C₃, respectively, from flow rate controller 60-A. These control signals are continuously monitored and modified via process control module 80-A so as to provide synchronized operation with the movement of plasma 18 and deposition zone 40 within substrate tube 12 and provide the desired axial refractive index profile shape.

It is to be understood that the system and method for fabricating optical fiber preforms in accordance with the present invention may utilize an isothermal plasma CVD process in combination with a quick response time delivery system (synchronized with the movements of the energy source), or in combination with a flash evaporation delivery system (also synchronized in the same manner), or both a flash evaporation delivery system and a quick response delivery system configuration.

Additionally, while the apparatus and method as described thus far is associated with controlling delivery system and energy source parameters in an isothermal plasma CVD process for reducing non-uniformities in the form of end tapers, the apparatus and method may also be used in a variety of other applications where precision control of the axial profile of an optical fiber preform is desired. For example, it is possible to introduce intentional variations in either the cross-sectional area or the refractive index profile (or both) along the length of the substrate tube (for example, forming dispersion-managed sections of fiber). Other intentional variations in the form of introducing gain dopants (for in-line amplifier applications) can also be implemented by controlling the delivery system and energy source associated with a low pressure isothermal CVD system of the present invention.

The proposed method and apparatus of the present invention synergistically uses the narrow deposition zone of isothermal plasma CVD and precision reagent flow parameters to optimize the system response time and tailor the deposition profile along the substrate tube. This method and apparatus may be advantageous in fabricating doped tubes, such as in the fabrication of Ge-doped multimode core rods or in the creation of a fluorine-doped region on the inside of a silica overcladding tube. Alternatively, the ability to provide precision profile control allows for the creation of optical fibers with graded index profiles and specialty fibers, where complex refractive index profile shapes (involving multiple layers and multiple compositions) may be required.

Various embodiments of the present invention have been described above, but it should be understood that they have been presented by way of example, and not limitation. It will be apparent to persons skilled in the relevant art that various changes in form and detail may be made therein without departing from the spirit and scope of the invention. Thus, the present invention should not be limited by any of the above-described embodiments, but should be defined only in accordance with the following claims and their equivalents.

## Claims

1. Apparatus for providing axial refractive index profile control of layers deposited within an optical fiber preform substrate tube, the apparatus comprising
a chemical vapor deposition (CVD) reactor configured to create an isothermal plasma within a preform substrate tube, and a deposition zone located upstream of the isothermal plasma;
an energy source for creating the isothermal plasma, the energy source comprising a radio frequency (RF) coil surrounding the substrate tube and an RF signal source for directing an electrical signal into the RF coil, the RF coil configured to traverse back and forth along at least a portion of an axial extent of the preform substrate tube to provide axial movement of the isothermal plasma and the deposition zone within the substrate tube;
a delivery system coupled to the reactor for introducing reagents into the deposition zone within the substrate tube, the delivery system configured to respond to control signals for changing the reagent composition and concentration provided to the substrate tube; and
a control system coupled to both the energy source and the delivery system for synchronizing the movement of the RF coil of the energy source with the composition and concentration of reagents introduced by the delivery system in a manner that provides the desired axial control of the refractive index profile of the created optical fiber preform.

2. Apparatus as defined in claim 1 wherein the axial profile control comprises control of an optical fiber preform cross-sectional area.

3. Apparatus as defined in claim 2 wherein the axial profile control comprises maintaining an essentially uniform cross-sectional area along the optical fiber preform to minimize geometric end tapers.

4. Apparatus as defined in claim 1 wherein the axial profile control comprises control of an optical fiber preform refractive index profile.

5. Apparatus as defined in claim 4 wherein the axial profile control comprises maintaining an essentially uniform refractive index profile along the optical fiber preform to minimize optical end tapers.

6. Apparatus as defined in claim 1 wherein the delivery system further comprises a plurality of mass flow controllers, each mass flow controller associated with a different reagent source and response to a different control signal output from the control system for providing adjustments in the composition and concentration of the reagents introduced into the substrate tube.

7. Apparatus as defined in claim 1 wherein the control system comprises
a motion controller coupled to the RF coil for moving the RF coil back and forth in an axial direction along the length of the substrate tube, as controlled by a motion control signal applied as an input thereto;
a flow rate controller coupled to the delivery system for providing a plurality of flow control signals to each reagent source and carrier gas source so as to modify the concentration and composition of the reagents delivered to the substrate tube; and
a process control module coupled to both the motion controller and the flow rate controller, the process control module for receiving inputs associated with the desired axial refractive index profile shape and providing output control signals to the motion controller and the flow rate controller to synchronize the delivery of specific reagent compositions and concentrations with the movement of the RF coil.

8. Apparatus as defined in claim 1 wherein the control system incorporates information associated with movement lags of the energy source in performing synchronization of the delivery system and the movement of the RF coil of the energy source.

9. A method of providing axial refractive index profile control of layers deposited within an optical fiber preform substrate tube, the method comprising
inserting a preform substrate tube within a chemical vapor deposition (CVD) reactor;
creating an isothermal plasma within the preform substrate tube and a deposition zone located within the substrate tube upstream of the isothermal plasma, where the isothermal plasma and deposition zone are controlled to move in an axial direction back and forth within the substrate tube;
introducing reagents into the deposition zone within the substrate tube from a delivery system that is configured to respond to control signals for changing the reagent composition and concentration; and
controlling the movement of the plasma within the substrate tube and the flow of reagents into the deposition zone in a synchronized manner that creates the desired axial refractive index profile control of the layers deposited within the substrate tube.

10. The method as defined in claim 9 wherein the axial profile control comprises maintaining an essentially uniform cross-sectional area along an optical fiber preform to minimize geometric end tapers.

11. The method as defined in claim 9 wherein a plurality of mass flow controllers, each mass flow controllers associated with a different reagent source, is used to provide adjustments in the composition and concentration of the reagents introduced into the substrate tube.
